# EUROPÄISCHE PATENTSCHRIFT

(11) **EP 2 923 979 B1**
(45) Veröffentlichungstag und Bekanntmachung des Hinweises auf die Patenterteilung: **01.11.2017**
(21) Anmeldenummer: 15153162.1
(22) Anmeldetag: 30.01.2015
(51) Int. Cl.: B65H 5/36, B65H 11/00

(54) **Verfahren und Vorrichtung zum Niederhalten eines Bogens auf dem Zuführtisch einer Bogen verarbeitenden Maschine**
Method and device for holding down a sheet on the feed table of a sheet processing machine
Procédé et dispositif de retenue d'une feuille sur la table d'alimentation d'une machine de traitement de feuille

(30) Priorität: 21.02.2014 DE 102014002468
(43) Veröffentlichungstag der Anmeldung: 30.09.2015
(73) Patentinhaber: Heidelberger Druckmaschinen AG, 69115 Heidelberg (DE)
(72) Erfinder: Ehrbar, David, 69190 Walldorf (DE); Müller, Andreas, 69120 Heidelberg (DE)

(56) Entgegenhaltungen:
- EP-A1- 1 681 253
- DE-A1- 10 246 297
- DE-A1- 10 344 402

## Beschreibung

Die Erfindung betrifft ein Verfahren und eine Vorrichtung zum Niederhalten eines Bogens auf dem Anlegetisch einer Bogen verarbeitenden Maschine, insbesondere Stanze oder Druckmaschine.

Der Erfindung liegt das Problem zugrunde, dass Bogen, insbesondere dünne Bogen, dazu neigen, an ihrer Vorderkanten Verwölbungen oder Wellen auszubilden, die beim Weitertransport des Bogens durch nachgeordnete Greifersysteme zu Verspannungen oder Knitterbildung des Bogens an seiner Vorderkante führen können.

Durch die DE 4028426 C2 ist eine Vorrichtung zum Glätten einer Bogenvorderkante vor dem Transport mittels nachgeordneter Greifereinrichtungen bekannt. Hierbei wird die Bogenvorderkante mittels Fixierdüsen am Zuführtisch festgesaugt und mittels Klemmrollen gegen den Zuführtisch gedrückt und somit geklemmt.

Die EP 1 681 253 A1, DE 102 46 297 A1 und DE 103 44 402 A1 zeigen jeweils einen Glättbalken im Bereich des Zuführtischs einer Bogen verarbeitenden Maschine. Dabei sind unterschiedliche Antriebsmechanismen offenbart, um den Glättbalken vertikal auf einen Bogen zu zu bewegen, um den Bogen zu glätten.

Der Erfindung liegt die Aufgabe zugrunde ein alternatives Verfahren und eine Vorrichtung zu schaffen, bei welcher der Bogen nicht eingeklemmt wird.

Die Aufgabe wird erfindungsgemäß durch die Merkmale der Ansprüche 1 und 9 gelöst. Es ist ein besonderer Vorteil der Erfindung, dass ein vorgesehener Glättbalken den Bogen glättet ohne diesen zu klemmen. Durch diese Maßnahme wird sichergestellt, dass eine Oberfläche des Bogens nicht beschädigt wird. Durch eine spezielle Glättbewegung des Glättbalkens, nämlich von der Mitte zu den Seiten des Bogens wird der Bogen gleichmäßig zu den Seiten hin geglättet und somit eine Faltenbildung vermieden.

Zur Erzeugung der Glättbewegung des Glättbalkens ist ein im Takt der Bogen verarbeitenden Maschine antreibbarer, Kennlinien gesteuerter Antrieb, insbesondere ein Elektromotor vorgesehen.

Ein vorgesehenes Viergelenkgetriebe verbindet den Antrieb mit dem Glättbalken.

Durch den erfindungsgemäßen Glättbalken können alle Grammaturen sicher verarbeitet werden ohne Markierungen auf dem Bogen zu hinterlassen, damit dieser faltenfrei von Greifeinrichtungen ergriffen werden kann.

Es ist ein besonderer Vorteil der Erfindung, dass alle Grammaturen sicher verarbeitet werden können ohne dass Markierungen auf dem Bogen entstehen. Unverspannte Bögen sichern in Druckmaschinen ein dublierfreies Druckergebnis und hohe Passergenauigkeit

Ein Ausführungsbeispiel der Erfindung ist in den Zeichnungen dargestellt und wird im Folgenden beschrieben. Es zeigen
- Figur 1: eine Stanze für bogenförmiges Material im Schnitt in schematischer Darstellung,

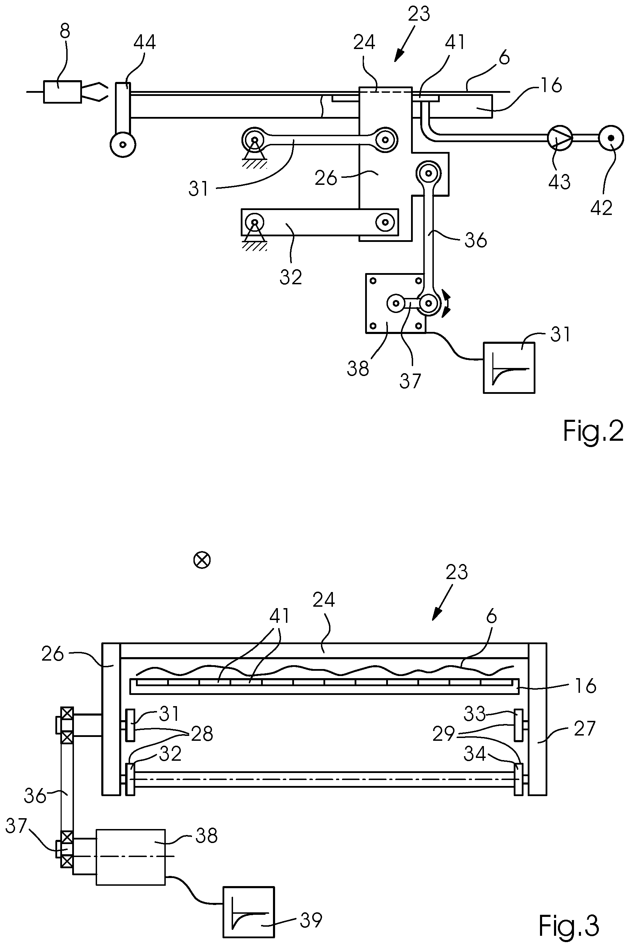

- Figur 2: den erfindungsgemäßen Bogenniederhalter in einer Seitenansicht,
- Figur 3: eine Vorderansicht des Niederhalters entgegen der Bogentransportrichtung gesehen,
- Figur 4a-c: den Niederhalter in verschiedenen Positionen beim Glättvorgang,
- Figur 5: ein Diagramm zur Ansteuerung des Elektromotors.

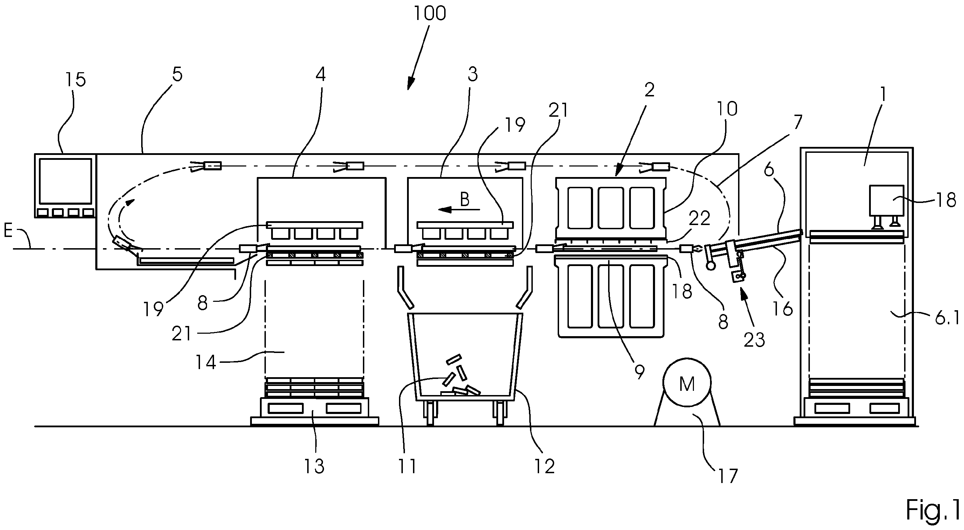

In Figur 1 ist der prinzipielle Aufbau einer Bogenstanz- und -prägemaschine 100 zum Stanzen, Ausbrechen, Nutzentrennen und Ablegen von Bogen aus Papier, Pappe, Kunststoff und dergleichen dargestellt. Die Stanz- und Prägemaschine 100 besitzt einen Anleger 1, eine Stanzstation 2, eine Ausbrechstation 3 und einen Ausleger 4 mit Ablage- und Nutzentrennstation, die von einem gemeinsamen Maschinengehäuse 5 getragen und umschlossen werden und von einem Hauptantrieb 17 angetrieben werden. Von einer Seite, der sogenannten Bedienerseite, sind die Bearbeitungsstationen 2, 3, 4 zugänglich; auf der gegenüberliegenden Seite, der sogenannten Antriebsseite, befindet sich der Antriebsstrang der Bogenstanz- und -prägemaschine 100. Eine Maschinensteuerung 15 steuert die Abläufe innerhalb der Stanzmaschine 100.

Die Bogen 6 werden durch einen Anleger 1 von einem Stapel vereinzelt, dem Bogentransportsystem 7 zugeführt und von an Greiferbrücken eines Greiferwagens 8 befestigten Greifern an ihrer Vorderkante ergriffen und in Bogentransportrichtung B intermittierend durch die verschiedenen Stationen 2, 3 und 4 der Stanz- und Prägemaschine 100 hindurchgezogen.
Das Bogentransportsystem 7 besitzt mehrere Greiferwagen 8, sodass mehrere Bogen 6 gleichzeitig in den verschiedenen Stationen 2, 3 und 4 bearbeitet werden können. Die Greiferwagen 8 können von einem Kettenantrieb oder in einer alternativen Ausführungsform durch einen elektromagnetischen Linearantrieb mit Wanderfeldmotoren angetrieben werden, wie beispielsweise in der DE 20 2007 012 349 U1 beschrieben.

Die Stanzstation 2 besteht aus einem unteren Tiegel, einem sog. Untertisch 9, und einem oberen Tiegel, einem sog. Obertisch 10. Der Obertisch 10 ist vertikal hin- und herbewegbar gelagert und mit einem Oberwerkzeug 22 mit Stanz- und Rillmessern versehen. Der Untertisch 9 ist fest im Maschinengestell gelagert und mit einer Gegenplatte 18 zu den Stanz- und Rillmessern versehen. Alternativ kann auch der Obertisch 10 feststehend und der Untertisch 9 bewegt sein. Beim Prägen kommen an Stelle der Stanz- und Rillwerkzeuge Prägewerkzeuge, insbesondere in Form sogenannter Prägeklischees, zum Einsatz.

Der Greiferwagen 8 transportiert den Bogen 6 von der Stanz- und Prägestation 2 in die nachfolgende Ausbrechstation 3, die mit Ausbrechwerkzeugen 19, 21 ausgestattet ist. In der Ausbrechstation 3 werden mit Hilfe der Ausbrechwerkzeuge 19, 21 die nicht benötigten Abfallstücke 11 aus dem Bogen 6 nach unten herausgestoßen, wodurch die Abfallstücke 11 in einen unter der Station eingeschobenen wagenartigen Behälter 12 fallen.

Von der Ausbrechstation 3 gelangt der Bogen 6 in den Ausleger 4, wo der Bogen 6 entweder nur einfach abgelegt wird, oder aber gleichzeitig eine Trennung der einzelnen Nutzen eines jeweiligen Bogens 6 erfolgt. Dazu besitzt der Ausleger 4 ein Nutzentrennwerkzeug 19, 21. Der Ausleger 4 kann auch eine Palette 13 enthalten, auf der die einzelnen Bogen 6 bzw. Nutzen in Form eines Stapels 14 aufgestapelt werden, so dass nach Erreichen einer bestimmten Stapelhöhe die Palette 13 mit dem Bogenstapel 14 aus dem Bereich der Stanz- und Prägemaschine 100 weggefahren werden kann. Um die Maschine 100 während des Stapeltausches nicht anhalten zu müssen können Hilfsstapeleinrichtungen zum Einsatz kommen.

An einem den Stanz- und/oder prägestationen 2 bis 4 zugewandten Ende des Zuführtisches 16 ist ein Bogenniederhalter 23 angeordnet.

Der Niederhalter 23 weist im Wesentlichen einen quer zur Bogentransportrichtung über dem Zuführtisch 16 angeordneten Glättbalken 24 auf, welcher im Takt der Bogen verarbeitenden Maschine z. B. Bogendruckmaschine insbesondere Stanze aus einer Position H₀ über dem Zuführtisch 16 in Richtung auf den Zuführtisch 16 in eine Position H₂ absenkbar ist. Der Glättbalken 24 ist an seitlich des Zuführtisches 16 angeordneten Koppeln 26, 27 befestigt, welche jeweils Teil eines Viergelenkes 28, 29 sind. Jedes Viergelenk 28, 29 weist darüber hinaus zwei horizontal parallel zueinander angeordnete Lagerhebel 31, 32; 33, 34 auf. Diese sind mit einem ersten Ende stationär an einem Seitengestell des Zuführtisches 16 schwenkbar angeordnet und mit einem zweiten Ende jeweils an der Koppel 26; 27.

Die Koppel 26 weist einen dritten Hebel 36 auf, welcher mit seinem ersten Ende gelenkig an der Koppel 26 gelagert ist und mit seinem zweiten Ende mit einem Exzenter 37 verbunden ist, welcher von einem Motor 38 rotierend antreibbar ist. Der Motor 38 wird im Takt der Bogen verarbeitenden Maschine, z. B. Stanze 100 nach einem einstellbaren Geschwindigkeitsprofil 39 angetrieben.

Das Geschwindigkeitsprofil 39 ist derart gestaltet, dass die Mitte des Glättbalkens 24 unmittelbar vor einem Erreichen der Endlage der Absenkbewegung H₂ gerade so viel überschwingt (Überschwinger) dass die Mitte des Glättbalkens 24 ihre Endlage erreicht, bevor die Enden des Glättbalkens 24 ihre Endlage erreichen. Die Schwingung des Glättbalkens 24 klingt nach dem einmaligen Überschwingen der Balkenmitte ab oder wird ausgelöscht, so dass beim Einnehmen der Endposition der Enden des Glättbalkens 24 die Schwingung des Glättbalkens 24 nahezu vollständig ausgelöscht ist.

Der Glättbalken 24 vollführt genau eine Schwingung des ersten Eigenfrequenz. Alternativ kann der Glättbalken 24 mehrere Perioden der Schwingung der ersten Eigenfrequenz vollführen.

Der Glättbalken 24 wird vorzugsweise aus einer Ruhelage oder bei der Absenkbewegung mittels harmonischer Anregung zu der Schwingung der ersten Eigenfrequenz angeregt, welche durch Materialdämpfung oder gezielte Dämpfung über den Antrieb abklingt, während der Glättbalken 24 in seine Endlage H₂ bewegt wird.

Eine Überlagerung der Anregung mehrerer Eigenfrequenzen des Glättbalkens 24 wird durch eine von der ersten Eigenfrequenz abweichende Geometrie des Glättbalkens 24 bei einem ersten Kontakt des Glättbalkens 24 mit dem Bogen erreicht.

Der Zuführtisch 16 weist unterhalb des Glättbalkens 24 eine Anzahl von Saugöffnungen 41 zur Fixierung eines Bogens 6 auf. Die Saugöffnungen 41 sind im Takt der Bogen verarbeitenden Maschine mit Saugluft eines Unterdruckerzeugers 42 beaufschlagbar und mittels einer Drossel 43 einstellbar.

Ein über dem Zuführtisch 16 geförderter Bogen 6 wird an Vordermarken 44 ausgerichtet und angehalten. Sobald der Bogen 6 stoppt, wird der Glättbalken 24 nach unten bewegt. Zeitlich mit der Abwärtsbewegung des Glättbalkens 24, vorzugsweise an seinem Tiefpunkt H₂ wird die Saugluft angeschaltet. Der Glättbalken 24 stellt somit sicher, dass ein Luftspalt unter dem Bogen 6 klein genug ist, dass die Saugöffnungen 41 den Bogen 6 sicher ansaugen können. Der Hub und somit der Mindestabstand des Spaltes zwischen der Totpunktlage H₂ des Glättbalkens 24 und dem Zuführtisch 16 sind einstellbar, so dass unterschiedlich dicke Bögen 6 sicher angesaugt werden können.

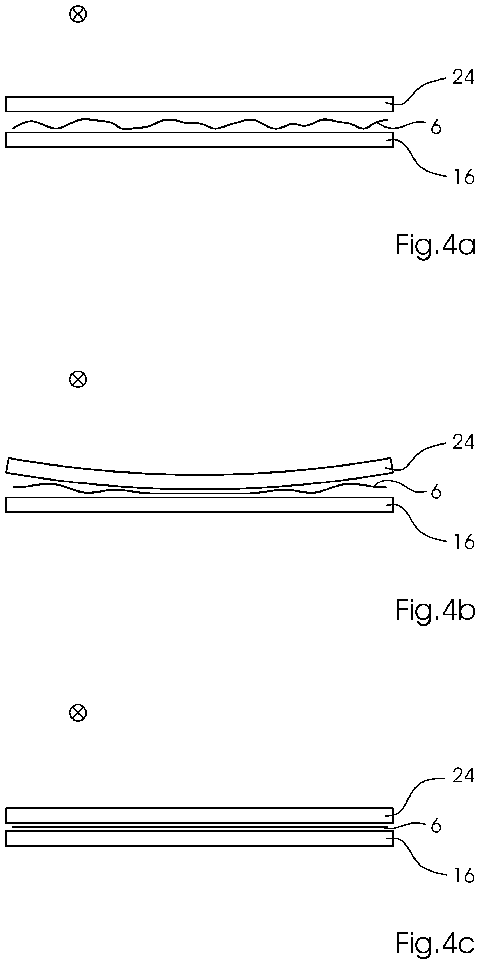

Damit die Bogenansaugung faltenfrei erfolgt, weist der Glättbalken 24 eine schwingungsfähige Struktur auf, d. h. dieser biegt sich bei der Abwärtsbewegung merklich durch. Durch den Antrieb 38 wird der Glättbalken 24 gezielt zu einer Schwingung angeregt, die einer kinematischen Bewegung im Takt der Bogen verarbeitenden Maschine überlagert wird und die bewirkt, dass die Balkenmitte zuerst den tiefsten Punkt H₂ über dem Bogen 6 erreicht und kurz darauf auch die Enden des Glättbalkens 26 ebenfalls diese Lage einnehmen (Figur 4a-c).

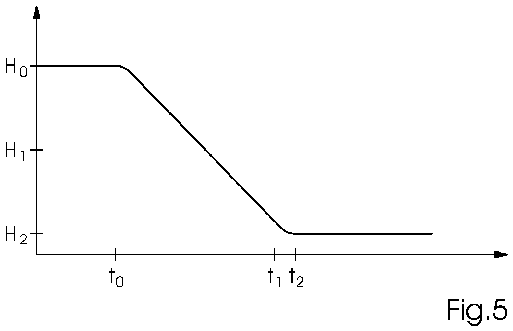

Der zeitliche Ablauf ist so koordiniert, dass der erste Sprung t₀ gemäß Figur 5 eine halbe Periodendauer der ersten Eigenfrequenz des Glättbalkens 24 vor dem Einsetzen der Saugwirkung t₁ der Saugöffnungen 41 stattfindet, so dass die Glättbalkenmitte zeitlich mit dem Einsetzen der Saugluft den unteren Totpunkt H₂ ihrer Schwingung erreicht. Zu diesem Zeitpunkt erfolgt dann der zweite Sprung, der die Enden des Glättbalkens 24 ebenfalls komplett absenkt und gleichzeitig die aus dem ersten Sprung resultierende periodische Eigenschwingung auslöscht, so dass der Glättbalken 24 zum Zeitpunkt t₂ in Ruhe in der unteren Position H₂ verharrt, das bedeutet der Glättbalken erreicht seinen Totpunkt.

Ergänzend wird vorgeschlagen, die Saugöffnungen 41 von der Mitte startend zu den Seiten mit Saugluft zu beaufschlagen, um einen Glattstreicheffekt zur Seite hin zu verbessern.

### Bezugszeichenliste

- 1: Anleger
- 2: Stanz- und/oder Prägestation
- 3: Ausbrechstation
- 4: Ausleger, ggfs. mit Nutzentrennstation
- 5: Maschinengehäuse
- 6: Bogen
- 7: Bogentransportsystem
- 8: Greiferwagen mit Greifern
- 9: Untertisch / unterer Tiegel
- 10: Obertisch / oberer Tiegel
- 11: Abfallstücke
- 12: Behälter
- 13: Palette
- 14: Auslagestapel
- 15: Steuerung mit Interface und Eingabegeräten
- 16: Zuführtisch mit einer Einheit zum Ausrichten der Bogen
- 17: Hauptantrieb
- 18: Unterwerkzeug
- 19: Oberwerkzeug mit Stempeln
- 20: ./.
- 21: Nutzentrenngitter oder Ausbrechbrett (Unterwerkzeug)
- 22: Oberwerkzeug (Stanzwerkzeug)
- 23: Niederhalter
- 24: Glättbalken
- 25: ./.
- 26: Koppel
- 27: Koppel
- 28: Viergelenk
- 29: Viergelenk
- 30: ./.
- 31: Lagerhebel
- 32: Lagerhebel
- 33: Lagerhebel
- 34: Lagerhebel
- 35: ./.
- 36: Hebel
- 37: Exzenter
- 38: Motor
- 39: Geschwindigkeitsprofil
- 40: ./.
- 41: Saugöffnung
- 42: Unterdruckerzeuger
- 43: Drossel
- 44: Vordermarken
- 45: ./.

- 100: Flachbett-Bogenstanz- und/oder -prägemaschine (Stanzmaschine)

- B: Bogentransportrichtung
- E: Bogentransportebene

- to: Zeitpunkt
- t₁: Zeitpunkt
- t₂: Zeitpunkt

- H₀: Höhe über Zuführtisch
- H₁: Höhe über Zuführtisch
- H₂: Höhe über Zuführtisch

## Patentansprüche

1. Verfahren zum Niederhalten eines Bogens auf dem Zuführtisch einer Bogen verarbeitenden Maschine, mit einem oberhalb des Zuführtisch angeordneten und in Richtung des Zuführtisches absenkbaren Glättbalkens,
wobei die Absenkbewegung des Glättbalkens (24) nach einem vorgebbaren Geschwindigkeitsprofil (39) erfolgt, und wobei der Glättbalken (24) zu einer Schwingung angeregt wird, die einer kinematischen Bewegung im Takt der Bogen verarbeitenden Maschine überlagert wird, **dadurch gekennzeichnet, dass** das Geschwindigkeitsprofil (39) derart gestaltet ist, dass die Mitte des Glättbalkens (24) unmittelbar vor einem Erreichen der Endlage der Absenkbewegung (H₂) gerade so viel überschwingt, dass die Mitte des Glättbalkens (24) die Endlage erreicht, bevor die Enden des Glättbalkens ihre Endlage erreichen.

2. Verfahren nach Anspruch 3,
**dadurch gekennzeichnet,**
**dass** das Geschwindigkeitsprofil (39) derart gestaltet ist, dass die Schwingung des Glättbalkens (24) nach dem Überschwingen der Balkenmitte abklingt oder ausgelöscht wird, so dass beim Erreichen der Endposition der Balkenenden die Schwingung des Glättbalkens nahezu vollständig ausgelöscht ist.

3. Verfahren nach Anspruch 2,
**dadurch gekennzeichnet,**
**dass** der Glättbalken (24) genau eine Schwingung der ersten Eigenfrequenz vollführt.

4. Verfahren nach Anspruch 2,
**dadurch gekennzeichnet,**
**dass** der Glättbalken (24) mehrere Perioden der Schwingung der ersten Eigenfrequenz vollführt.

5. Verfahren nach Anspruch 3,
**dadurch gekennzeichnet,**
**dass** das Geschwindigkeitsprofil (39) eine Ansteuerung enthält, bei welcher der Glättbalken (24) von einer Ruhelage (H₀) auf eine konstante Geschwindigkeit beschleunigt wird, später eine ganze Periodendauer der ersten Eigenfrequenz des Glättbalkens (24) auf eine Geschwindigkeit gleich null abgebremst wird.

6. Verfahren nach Anspruch 5,
**dadurch gekennzeichnet,**
**dass** ein Einschalten einer Saugwirkung mittels vorgesehener Saugöffnungen (41) erfolgt, sobald die Mitte des Glättbalkens (24) die Höhe (H₂) erreicht hat.

7. Verfahren nach Anspruch 4,
**dadurch gekennzeichnet,**
**dass** der Glättbalken (24) in seiner Ruhelage oder auf dem Weg nach unten mittels harmonischer Anregung zu einer Schwingung der ersten Eigenfrequenz angeregt wird, welche durch Materialdämpfung oder bewusste Dämpfung über den Antrieb abklingt, während der Glättbalken (24) sich in seine Endlage bewegt.

8. Verfahren nach einem der vorangehenden Ansprüche,
**dadurch gekennzeichnet,**
**dass** eine Überlagerung der Anregung mehrerer Eigenfrequenzen des Glättbalkens (24) eine von der ersten Eigenform abweichende Geometrie des Glättbalkens (24) beim ersten Kontakt des Glättbalkens (24) mit dem Bogen erreicht wird.

9. Vorrichtung zum Niederhalten eines Bogens auf dem Zuführtisch einer Bogen verarbeitenden Maschine mit einem oberhalb des Bogens angeordneten und in Richtung des Zuführtisches absenkbaren Glättbalkens,
wobei der Glättbalken (24) beidseitig des Zuführtisches (16) im Takt der Bogen verarbeitenden Maschine vertikal bewegbar gelagert ist, und wobei jeweils ein Viergelenkgetriebe (26, 31, 32; 27, 33, 34) zur Aufnahme des Glättbalkens (24) vorgesehen ist,
**dadurch gekennzeichnet,**
**dass** ein Exzenter (37) zum Antrieb des Viergelenkgetriebes und ein Kennlinien ansteuerbarer Motor (38) zum Antrieb des Exzenters (37) vorgesehen ist.

10. Vorrichtung nach Anspruch 9,
**dadurch gekennzeichnet,**
**dass** der Zuführtisch (16) Saugöffnungen (41) aufweist.

11. Vorrichtung nach Anspruch 10,
**dadurch gekennzeichnet,**
**dass** die Saugöffnungen (41) im Takt der Bogen verarbeitenden Maschine mit einem einstellbaren Unterdruck beaufschlagbar sind.

12. Vorrichtung nach einem der vorhergehenden Ansprüche 9 bis 11,
**dadurch gekennzeichnet,**
**dass** die Bogen verarbeitende Maschine eine Stanze oder Druckmaschine ist.

## Claims

1. Method for holding down a sheet on the feed table of a machine for processing sheets, the machine comprising a smoothing bar disposed above the feed table and lowerable in the direction of the feed table,
wherein the lowering movement of the smoothing bar (24) occurs in accordance with a predefinable velocity profile (39),
and wherein the smoothing bar (24) is caused to vibrate, said vibration superimposed to a kinematic movement in accordance with the cycle of the machine for processing sheets,
**characterized in that**
the velocity profile (39) is such that immediately before reaching the end position of the lowering movement (H₂), the centre of the smoothing bar (24) overshoots just enough for the centre of the smoothing bar (24) to reach the end position before the ends of the smoothing bar reach their end positions.

2. Method according to claim 3,
**characterized in**
**that** the velocity profile (29) is such that after the overshooting of the centre of the bar, the vibration of the smoothing bar (24) fades or is eliminated so that when the end position of the bar ends is reached, the vibration of the smoothing bar is almost completely eliminated.

3. Method according to claim 2,
**characterized in**
**that** the smoothing bar (24) carries out precisely one vibration of the first natural frequency.

4. Method according to claim 2,
**characterized in**
**that** the smoothing bar (24) carries out multiple periods of the vibration of the first natural frequency.

5. Method according to claim 3,
**characterized in**
**that** the velocity profile (39) includes an actuation in which the smoothing bar (24) is accelerated from a rest position (H₀) to a constant speed and is later decelerated to a speed equal to zero for the duration of an entire period of the first natural frequency of the smoothing bar (24).

6. Method according to claim 5,
**characterized in**
**that** a suction effect created by suction openings (41) that are provided is switched on as soon as the centre of the smoothing bar (24) has reached the height (H₂).

7. Method according to claim 4,
**characterized in**
**that** in its rest position or on its downward path, the smoothing bar (24) is caused to vibrate in the first natural frequency by means of harmonic excitation, said vibration fading due to material damping or intentional damping by the drive while the smoothing bar (24) moves to its end position.

8. Method according to any one of the preceding claims,
**characterized in**
**that** a superimposition of the excitation of multiple natural frequencies of the smoothing bar (24) is achieved by a smoothing bar (24) geometry that deviates from the first natural mode when the smoothing bar (24) first contacts the sheet.

9. Device for holding down a sheet on the feed table of a machine for processing sheets, the machine comprising a smoothing bar disposed above the feed table and lowerable in the direction of the feed table,
wherein on both sides of the feed table (16), the smoothing bar (24) is supported for vertical movement in accordance with the cycle of the machine for processing sheets, and wherein a respective four bar linkage (26, 31, 32; 27, 33, 34) is provided to receive the smoothing bar (24),
**characterized in**
**that** an eccentric (37) is provided to drive the four bar linkage and a motor (38) controllable in accordance with characteristic lines is provided to drive the eccentric (37).

10. Device according to claim 9,
**characterized in**
**that** the feed table (16) has suction openings (41).

11. Device according to claim 10,
**characterized in**
**that** an adjustable vacuum is applicable to the suction openings (41) in accordance with the cycle of the machine for processing sheets.

12. Device according to any one of the preceding claims 9 to 11,
**characterized in**
**that** the machine for processing sheets is a diecutting machine or a printing machine.

## Revendications

1. Procédé pour le maintien d'une feuille sur la table de marge d'une machine de traitement de feuilles, comprenant une barre de lissage disposée au-dessus de la table de marge et pouvant être abaissée en direction de la table de marge,
le mouvement d'abaissement de la barre de lissage (24) s'effectuant selon un profil de vitesse prédéterminable (39),
et la barre de lissage (24) étant activée à une vibration qui couvre un mouvement cinématique à la cadence de la machine de traitement de feuilles,
**caractérisé en ce**
**que** le profil de vitesse (39) est réalisé de sorte que le milieu de la barre de lissage (24) dépasse l'oscillation juste avant l'atteinte de la position finale du mouvement d'abaissement (H2) juste assez pour que le milieu de la barre de lissage (24) atteigne la position finale avant que les extrémités de la barre de lissage atteignent leur position finale.

2. Procédé selon la revendication 1,
**caractérisé en ce**
**que** le profil de vitesse (39) est configuré de sorte que l'oscillation de la barre de lissage (24) diminue après la suroscillation du milieu de la barre ou est supprimée de sorte qu'au moment d'atteindre la position finale des extrémités de barre, l'oscillation de la barre de lissage est presque entièrement supprimée.

3. Procédé selon la revendication 2,
**caractérisé en ce**
**que** la barre de lissage (24) exécute exactement un lissage de la première fréquence naturelle.

4. Procédé selon la revendication 2,
**caractérisé en ce**
**que** la barre de lissage (24) exécute plusieurs périodes de l'oscillation de la première fréquence naturelle.

5. Procédé selon la revendication 3,
**caractérisé en ce**
**que** le profil de vitesse (39) comporte une commande qui accélère la barre de lissage (24) depuis une position de repos (H₀) à une vitesse constante et freine ensuite toute une durée de période de la première fréquence naturelle de la barre de lissage (24) à une vitesse égale à zéro.

6. Procédé selon la revendication 5,
**caractérisé en ce**
**que** l'activation d'une aspiration s'effectue au moyen d'ouvertures d'aspiration prévues (41), dès que le milieu de la barre de lissage (24) a atteint la hauteur (H₂).

7. Procédé selon la revendication 4,
**caractérisé en ce**
**que** la barre de lissage (24) est activée, dans sa position de repos et sur le trajet vers le bas, au moyen d'une stimulation harmonique à une oscillation de la première fréquence naturelle, qui s'affaiblit par amortissement du matériau ou amortissement voulu par l'intermédiaire de l'entraînement pendant que la barre de lissage (24) se déplace en position finale.

8. Procédé selon l'une des revendications précédentes,
**caractérisé en ce**
**qu'**une superposition de la stimulation de plusieurs fréquences naturelles de la barre de lissage (24) atteint une géométrie de la barre de lissage (24), différente de la première forme naturelle, au moment du premier contact de la barre de lissage (24) avec la feuille.

9. Procédé pour le maintien d'une feuille sur la table de marge d'une machine de traitement de feuilles, comprenant une barre de lissage disposée au-dessus de la table de marge et pouvant être abaissée en direction de la table de marge,
la barre de lissage étant logée mobile verticalement des deux côtés de la table de marge (16) à la cadence de la machine de traitement de feuilles, et un quadrilatère (26, 31, 32 ; 27, 33, 34) étant respectivement prévu pour le logement de la barre de lissage (24),
**caractérisé en ce**
**qu'**il est prévu un excentrique (37) pour l'entraînement du quadrilatère articulé et un moteur (38) commandable par des lignes caractéristiques pour l'entraînement de l'excentrique (37).

10. Dispositif selon la revendication 9,
**caractérisé en ce**
**que** la table de marge (16) présente des ouvertures d'aspiration (41).

11. Dispositif selon la revendication 10,
**caractérisé en ce**
**que** les ouvertures d'aspiration (41) subissent une dépression réglable à la cadence de la machine de traitement de feuilles.

12. Dispositif selon l'une des revendications précédentes 9 à 11,
**caractérisé en ce**
**que** la machine de traitement de feuilles est une presse de découpe ou une machine d'impression.
